# EUROPÄISCHE PATENTSCHRIFT

(11) **EP 0 283 467 B1**
(45) Veröffentlichungstag und Bekanntmachung des Hinweises auf die Patenterteilung: **28.07.1993**
(21) Anmeldenummer: 88890053.7
(22) Anmeldetag: 14.03.1988
(51) Int. Cl.: B60R 1/06

(54) **Seitenspiegel für Kraftfahrzeuge**
Side mirror for motor vehicles
Rétroviseur latéral

(30) Priorität: 13.03.1987 AT 606/87
(43) Veröffentlichungstag der Anmeldung: 21.09.1988
(73) Patentinhaber: Klammer, Hans-Dieter, A-1030 Wien (AT)
(72) Erfinder: Klammer, Hans-Dieter, A-1030 Wien (AT)
(74) Vertreter: Beer, Manfred, Dipl.-Ing.

(56) Entgegenhaltungen:
- EP-A- 0 040 168
- DE-A- 2 914 361
- DE-A- 3 146 486
- GB-A- 785 359
- GB-A- 2 142 298
- GB-A- 2 177 665
- PATENT ABSTRACTS OF JAPAN, Band 7, Nr. 141 (M-223)[1286], 21. Juni 1983; & JP - A - 58 53538 (KAZUYUKI SAKASHITA) 30.03.1983
- PATENT ABSTRACTS OF JAPAN, Band 4, Nr. 84 (M-16)[566], 17. Juni 1980; & JP - A - 55 44077 (KENZABUROU FUKUSHIMA) 28.03.1980

## Beschreibung

Die Erfindung betrifft einen Seitenspiegel mit einem Spiegel und einem in Sehstrahlrichtung liegenden optischen Körper, wobei unterschiedliche Bereiche des optischen Körpers voneinander verschiedene Brechwirkungen aufweisen.

Es gibt bereits teilverkleidete Seitenspiegel, die wegen der Luftwirbel durch Totflächenbildung am Spiegel selbst nicht nur stark verschmutzen, sondern auch erhöhten Luftwiderstand verursachen, was wiederum zu äußerst knapper Dimensionierung der Spiegelfläche Anlaß gibt.

Aus der DE-A-3 526 271 ist es bekannt, am oberen Rand der Heckscheibe ein optisches Prisma zur besseren Übersicht beim Rückwärtsfahren anzuordnen. Dies bringt jedoch keine Verbesserung an Seitenspiegeln.

Aus der Gattungsbildenden DE-A-2 914 361 ist ein Rückspiegel mit einem am äußeren Rand angebrachten optischen Körper bekannt, der die aus dem toten Winkel ankommenden Strahlen auf den äußeren Bereich der Spiegelfläche umlenkt und dabei Bildsprung und Reflexion beim Übergang des Spiegelbildes eines überholenden Kfz vom normalen Rückblickbereich in den Bereich des toten Winkels vermeiden soll. Da der optische Körper nur am äußeren Rand des Rückspiegels angeordnet ist, verschmutzt der Rückspiegel wegen der Luftwirbel durch Totflächenbildung nicht nur, sondern verursacht auch einen erhöhten Luftwiderstand. Überdies trägt der optische Körper gemäß der DE-A-2 914 361 nichts dazu bei, den von der Fahrzeugkarosserie abstehenden Bereich des Seitenspiegels zu verkleinern.

Aufgabe der Erfindung ist es, einen Seitenspiegel mit geringem Luftwiderstand zu schaffen, der möglichst wenig verschmutzt.

Gelöst wird diese Aufgabe dadurch, daß der optische Körper einen Teil der Verkleidung des Seitenspiegels bildet und als strömungsgünstig geformte Klarsichtscheibe ausgebildet ist, und daß die Brechwirkung der Klarsichtscheibe vom vom Spiegel entfernt liegenden Bereich der Klarsichtscheibe zum dem Spiegel benachbarten Bereich der Klarsichtscheibe hin zumindest bereichsweise abnimmt.

Dadurch, daß der in Fahrtrichtung hinter dem Spiegel liegende Teil der Verkleidung als strömungsgünstig geformte Klarsichtscheibe ausgebildet ist, ist es bei Verwendung einer lichtbrechenden Klarsichtscheibe möglich, den der Fahrzeuglängsmittelebene zugekehrten Spiegelrand näher an die Längsmittelebene heranzurücken, als dies bei einem Rückspiegel mit fahrtrichtungsparalleler Bildprojektion entlang der Karosserieaußenkante möglich wäre.

Durch Anwendung der erfindungsgemäßen Maßnahme kann der Seitenspiegel so in die Fahrzeugoberfläche integriert werden, daß eine Erhöhung des Luftwiderstandes (cw-Wert) durch den Spiegel vermindert wird, obwohl es sogar gelingt die Spiegelfläche zu vergrößern und die für den Luftwiderstand mitverantwortliche Fahrzeugquerschnittsfläche zu verringern.

Die Verschmutzung der Seitenfenster, die durch Verwirbelung an Totflächen im Bereich der bekannten Spiegel üblicherweise auftritt, kann bei Verwendung der erfindungsgemäßen Totalverkleidung ebenfalls vermindert werden, wobei die Verschmutzung der Spiegel selbst gänzlich ausgeschaltet werden kann.

Die Beschädigungsgefahr des Spiegels wird ebenfalls herabgesetzt, ebenso die Notwendigkeit der Justierung desselben.

Im Hinblick auf die Größe der Sichtfläche wird häufig eine Justierung des Spiegels überhaupt entfallen können.

Gemäß der Erfindung kann entsprechend den aufgrund der jeweiligen Fahrzeuggeometrie erforderlichen Sichtwinkeln vorgesehen sein, daß der Spiegel ein Planspiegel ist, eine konkave, konvexe, sphärische oder zylindrische Krümmung aufweist, ein fein gerasteter Spiegel mit schräg zum Grobverlauf der Spiegelfläche liegenden Spiegelfacetten oder eine Kombination der genannten Spiegelflächen ist.

Feingerasterte Spiegel werden vor allem dann zur Anwendung gebracht, wenn bei vorgegebenem Verlauf der Spiegeloberfläche die gewünschte Reflexionsrichtung nicht anders erzielt werden kann.

Andererseits ist der erfindungsgemäße Seitenspiegel dadurch gekennzeichnet, daß er in einen Karosserieseitenteil mit einem Seitenfenster integriert ist, daß das Seitenfenster in einen versenkbaren Teil und ein in Fahrtrichtung davor liegendes Dreieckfenster aufgeteilt ist, daß der Seitenspiegel unter dem Dreieckfenster angeordnet ist, daß der versenkbare Teil des Seitenfensters weder im geschlossenen noch im ganz oder teilweise geöffneten Zustand im Blickfeld des Fahrzeuglenkers auf den Spiegel liegt und daß die in Fahrtrichtung hinter dem Seitenspiegel gelegene Karosserieoberfläche weitgehend bündig mit Führungselementen der versenkbaren Seitenscheibe verläuft.

Bei Fahrzeugneukonstruktionen lassen sich die erfindungsgemäßen Vorteile vor allem dadurch nutzen, daß zumindest hinter der Klarsichtverkleidung eine mit den Führungselementen der versenkbaren Seitenscheiben möglichst bündig verlaufende Karosserieoberfläche den Blick nach hinten frei gibt, und die Vorrichtungen für Türverriegelung und Fensterheben dementsprechend angeordnet werden. Der Fensterbereich oberhalb von Spiegel und Klarsichtverkleidung wird in an sich bekannter Weise durch eine nicht versenkbare Klarsichtscheibe gebildet.

Die Vorteile können durch nachträglichen Einbau des erfindungsgemäßen Spiegels auch an bereits in Verwendung stehenden Fahrzeugen erzielt werden, und zwar dadurch, daß er in weiterer Ausgestaltung der Erfindung mit einem Bauteil verbunden ist, dessen oberster, nicht durch den Seitenspiegel gebildeter Abschnitt aus einer ebenen oder gewölbten Klarsichtscheibe mit vorzugsweise konstanter Stärke besteht. Ein vorhandenes Dreieckfenster braucht dabei nur durch einen entsprechenden Bauteil ersetzt werden, wogegen der übrige Teil durch eine erfindungsgemäß ausgebildete Totalverkleidung des Seitenspiegels gebildet wird.

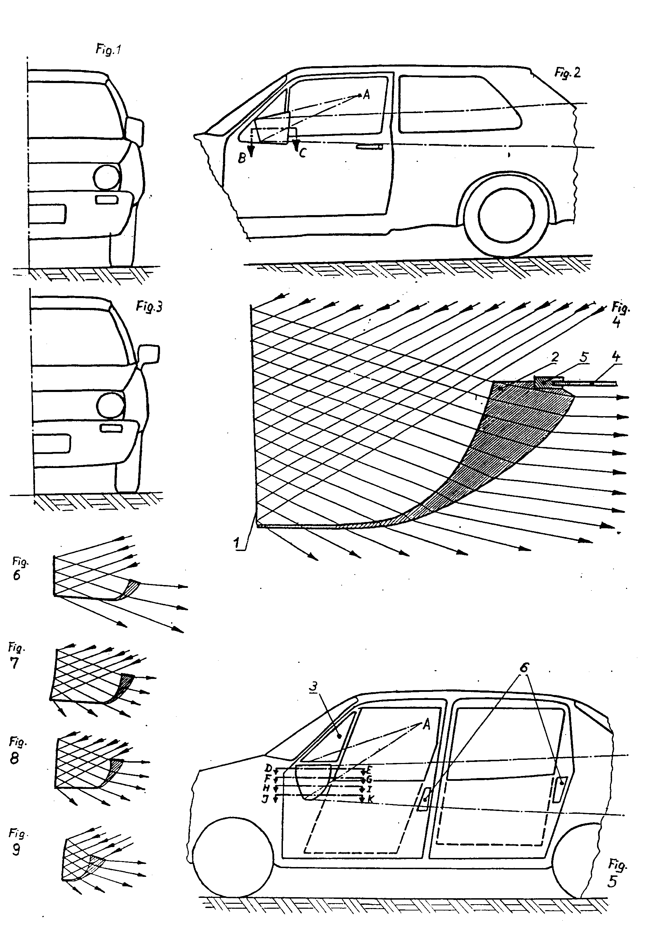

Die Erfindung wird nachstehend anhand der in den Zeichnungen dargestellten Ausführungsbeispiele näher erläutert:
Hiebei zeigen die Fig. 1 bis 14 eine Anwendungsmöglichkeit eines erfindungsgemäß ausgestalteten Seitenspiegels bei bereits in Verkehr stehenden Personenkraftwagen, und zwar
Fig. 1 eine Vorderansicht nach erfolgtem Umbau,
Fig. 2 eine Seitenansicht eines Personenkraftwagens gemäß Fig. 1 und
Fig. 3 zeigt zum Vergleich mit Fig. 1 die Vorderansicht vor dem Umbau. Figur 4 zeigt in größerem Maßstab einen Schnitt entlang der Linie BC in Figur 2, wobei die strömungsgünstig gestaltete Verkleidung vor dem Spiegel nicht dargestellt ist.

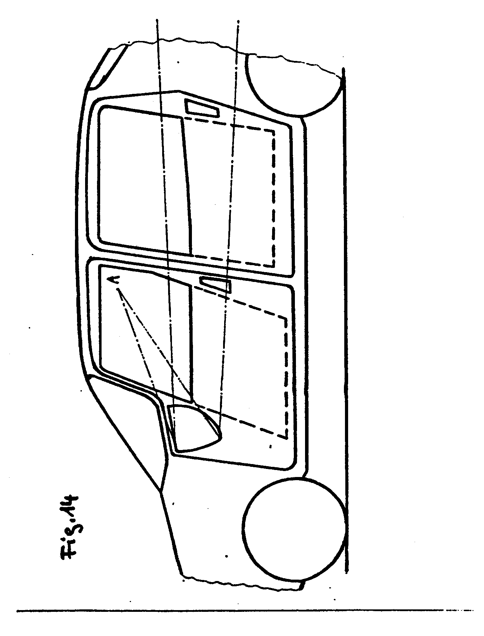

Die Figuren 5 bis 14 zeigen Möglichkeiten der Anwendung eines erfindungsgemäß angeordneten Seitenspiegels bei Fahrzeugneukonstruktionen. Die Figuren 10 und 11 zeigen Darstellungen eines mit erfindungsgemäß angeordneten Seitenspiegeln ausgestatteten Autos. Figur 5 zeigt die teilweise Seitenansicht eines mit einem erfindungsgemäß angeordneten Seitenspiegel ausgestatteten Personenkraftwagens. Entsprechend der Figur 5 wird in Figur 6 der Schnitt DE, in Figur 7 der Schnitt FG, in Figur 8 der Schnitt HI und in Figur 9 der Schnitt JK gezeigt. Figur 12 zeigt einen Querschnitt durch ein Fahrzeug bei dessen Konzeption schon die erfindungsgemäße Anordnung der Seitenspiegel berücksichtigt wurde, Figur 13 hingegen einen Querschnitt durch ein mit herkömmlichen Seitenspiegeln ausgestattetes Fahrzeug. Der Vergleich von Figur 12 mit Figur 13 verdeutlicht die Vorteile, die sich aus einer möglichst bündig mit der Scheibenführung verlaufenden Karosserieoberfläche für die Sicht nach hinten ergeben.

Eine Anordnung der Türschlösser, die die in Figur 12 gezeigte Gestaltung des Türquerschnittes ermöglicht, ist aus Figur 5 ersichtlich.

In allen betreffenden Figuren ist das Auge des Kraftfahrzeuglenkers mit A gekennzeichnet, darüberhinaus gelten folgende Bezeichnungen:
Spiegel 1
Klarsichtverkleidung 2
Klarsichtscheibe oberhalb von Spiegel und Klarsichtverkleidung 3
versenkbare Seitenscheibe 4
Führungselement der versenkbaren Seitenscheibe 5
Türschloß 6.

Eine Totalverkleidung eines Seitenspiegels hat einen in Fahrtrichtung hinter dem Spiegel 1 liegenden Teil der Verkleidung, der als strömungsgünstig geformte Klarsichtscheibe 2 mit mehr oder weniger starker, alsso auch unter Umständen den Wert Null betragender, nicht unbedingt im gesamten Bereich gleichmäßiger Brechwirkung ausgeführt ist. Dadurch entsteht die Möglichkeit, den der Fahrzeuglängsmittelebene benachbarten Spiegelrand noch näher an diese heranzurücken als dies bei einer fahrtrichtungsparallelen Bildprojektion entlang der Karosserieaußenkante ohne Lichtbrechung möglich wäre. Der Spiegel 1 ist je nach den aufgrund der jeweiligen Fahrzeuggeometrie erforderlichen Sichtwinkeln als Planspiegel, konkaver oder konvexer, sphärischer oder zylindrischer Spiegel in allen erforderlichen Kombinationen ausgeführt und kann, falls bei vorgegebenem Verlauf der Spiegeloberfläche die gewünschte Reflexionsrichtung nicht anders erzielt werden kann, auch als fein gerasteter Spiegel mit schräg zum Grobverlauf der Spiegelfläche liegenden Spiegelfacetten zur Anwendung kommen.

Figur 5 zeigt einen Karosserieseitenteil mit integriertem Seitenspiegel, bei dem sowohl die Verriegelbarkeit der Türe als auch die Versenkbarkeit des Seitenfensters gewährleistet ist. Das Seitenfenster ist in einen versenkbar gestalteten Teil 4 und ein in Fahrtrichtung davor liegendes, sogenanntes Dreieckfenster 3 aufgeteilt, wobei der Blick aus dem Wageninneren auf den vorn unter dem Dreieckfenster 3 positionierten Spiegel 1 durch eine unter dem Dreieckfenster 3 vorgesehene Öffnung geht, wogegen der Blick aus der in Fahrtrichtung hinter dem Spiegel 1 gelegenen Klarsichtverkleidung 2 fahrtrichtungsparallel nach hinten entlang der nur wenige Zentimeter vom äußeren Spiegelrand zur Fahrzeuglängsmittelebene nach innen versetzten Karosserieaußenkante unterhalb der versenkbaren Seitenfenster 4 und dahinter dadurch gewährleistet ist, daß die Karosserieoberfläche dem Verlauf der Fensterscheibenführung 5 folgt und die Vorrichtungen 6 zum Verriegeln der Tür und zum Senken und Heben des Fensters ausschließlich hinter oder unter den Scheibenführungen 5 oder unmittelbar an der Türinnenwand liegen, wobei erforderlichenfalls die Führungen 5 zum Versenken der Scheiben 4 nicht senkrecht, sondern schräg nach vorn unten verlaufen.

Wenn ein Fahrzeug nachträglich mit (einem) erfindungsgemäß verkleideten Seitenspiegel(n) ausgestattet werden soll, wird ein vorhandenes Dreieckfenster 3 durch einen Bauteil ersetzt, dessen oberster Abschnitt aus einer ebenen oder gewölbten Klarsichtscheibe 4 mit vorzugsweise konstanter Stärke besteht. Dadurch können alle wesentlichen Vorteile dieser Erfindung auch für Altautos genutzt werden, sofern diese im Seitenfensterbereich die eingangs erwähnte Zweiteilung entweder von vornherein haben oder anläßlich der beschriebenen Umrüstung erhalten.

Eine Ausführungsform des erfindungsgemäßen Seitenspiegels, bei welcher dieser vor einem versenkbaren Seitenfenster angeordnet ist, ist in Figur 14 gezeigt.

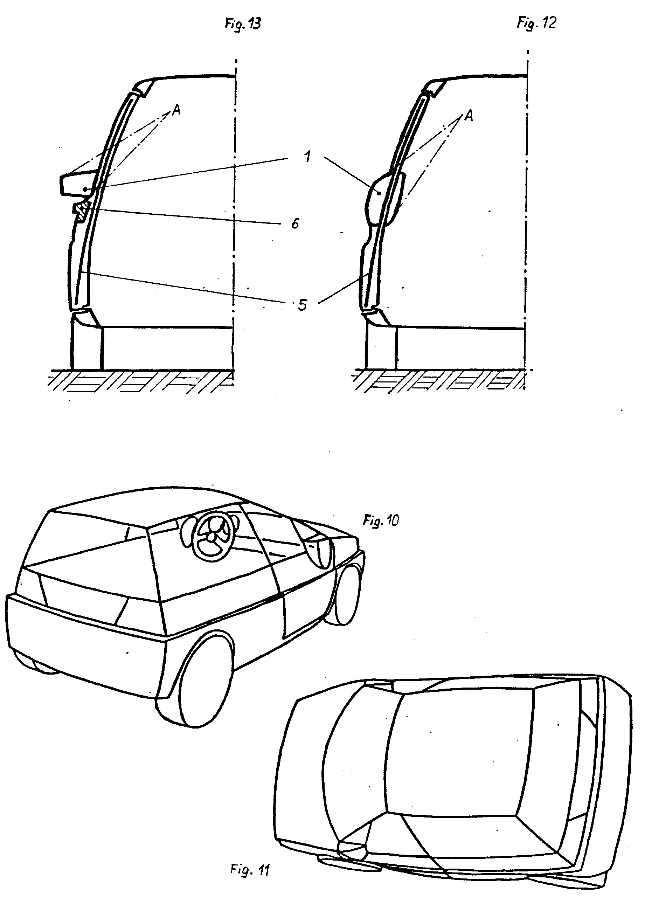

Alle Figuren, in welchen der Strahlengang eingezeichnet ist, lassen erkennen, daß durch die Möglichkeit, ein örtlich unterschiedliches Brechungsvermögen der Klarsichtverkleidung vorzusehen (siehe insbesondere Figuren 4, 6, 7 und 8), ein in Breite und Tiefe den Erfordernissen optimal entsprechendes Sichtfeld erzielt werden kann.

## Patentansprüche

1. Seitenspiegel mit einem Spiegel (1) und einem in Sehstrahlrichtung liegenden optischen Körper (2), wobei unterschiedliche Bereiche des optischen Körpers (2) voneinander verschiedene Brechwirkungen aufweisen, dadurch gekennzeichnet, daß der optische Körper (2) einen Teil der Verkleidung des Seitenspiegels bildet und als strömungsgünstig geformte Klarsichtscheibe (2) ausgebildet ist, und daß die Brechwirkung der Klarsichtscheibe (2) vom vom Spiegel (1) entfernt liegenden Bereich der Klarsichtscheibe (2) zum dem Spiegel (1) benachbarten Bereich der Klarsichtscheibe (2) hin zumindest bereichsweise abnimmt.

2. Seitenspiegel nach Anspruch 1, dadurch gekennzeichnet, daß die Brechwirkung der Klarsichtscheibe (2) vom dem Spiegel (1) benachbarten Bereich zum vom Spiegel (1) entfernt liegenden Bereich hin im wesentlichen kontinuierlich zunimmt.

3. Seitenspiegel nach Anspruch 1 oder 2, dadurch gekennzeichnet, daß der Spiegel (1) ein Planspiegel ist, eine konkave, konvexe, sphärische oder zylindrische Krümmung aufweist, ein fein gerasteter Spiegel mit schräg zum Grobverlauf der Spiegelfläche liegenden Spiegelfacetten oder eine Kombination der genannten Spiegelflächen ist.

4. Seitenspiegel nach einem der Ansprüche 1 bis 3, dadurch gekennzeichnet, daß er in einen Karosserieseitenteil mit einem Seitenfenster integriert ist, daß das Seitenfenster in einen versenkbaren Teil (4) und ein in Fahrtrichtung davor liegendes Dreieckfenster (3) aufgeteilt ist, daß der Seitenspiegel unter dem Dreieckfenster angeordnet ist, daß der versenkbare Teil (4) des Seitenfensters weder im geschlossenen noch im ganz oder teilweise geöffneten Zustand im Blickfeld des Fahrzeuglenkers auf den Spiegel (1) liegt und daß die in Fahrtrichtung hinter dem Seitenspiegel gelegene Karosserieoberfläche weitgehend bündig mit Führungselementen (5) der versenkbaren Seitenscheibe (4) verläuft.

5. Seitenspiegel nach einem der Ansprüche 1 bis 3, dadurch gekennzeichnet, daß er mit einem Bauteil verbunden ist, dessen oberster, nicht durch den Seitenspiegel gebildeter Abschnitt (3) aus einer planen Klarsichtscheibe mit konstanter Stärke besteht.

6. Seitenspiegel nach Anspruch 4, dadurch gekennzeichnet, daß der Bereich (3) über dem Seitenspiegel (1) durch einen in der Karosserie nicht beweglich angeordneten, insbesondere nicht nach unten verschiebbaren Teil, wie beispielsweise ein Dreieckfenster, einen Dachsteher oder einen nach hinten gezogenen Teil der Windschutzscheibe, gebildet ist.

## Claims

1. Side mirror with a mirror (1) and an optical member (2) lying in the direction of the line of sight, different areas of the optical member (2) having refractive effects which are different from one another, characterised in that the optical member (2) forms part of the covering of the side mirror, and is designed as a clear-vision screen (2) with an appropriately aerodynamic shape, and in that the refractive effect of the clear-vision screen (2) decreases at least in regions from the region of the clear-vision screen (2) remote from the mirror (1) towards the region of the clear-vision screen (2) adjacent to the mirror (1).

2. Side mirror according to claim 1, characterised in that the refractive effect of the clear-vision screen (2) increases substantially continuously from the region adjacent to the mirror (1) towards the region remote from the mirror (1).

3. Side mirror according to claim 1 or 2, characterised in that the mirror (1) is a plane mirror, having a concave, convex, spherical or cylindrical curvature, and is a finely indexed mirror with mirror facets lying obliquely to the coarse run of the mirror surface, or is a combination of the said mirror surfaces.

4. Side mirror according to one of claims 1 to 3, characterised in that it is integrated with a side window into a side portion of the bodywork, in that the side window is subdivided into a lowerable portion (4) and a triangular window (3) lying in front of it in the direction of travel, in that the side mirror is disposed under the triangular window, in that the lowerable portion (4) of the side window does not lie in the line of sight, either in the closed or in the open condition, between the vehicle driver and the mirror (1), and in that the bodywork surface located in the direction of travel behind the side mirror extends substantially flush with guide members (5) of the lowerable side window (4).

5. Side mirror according to one of claims 1 to 3, characterised in that it is connected to a component whose uppermost portion (3) not formed by the side mirror comprises a plane clear-view screen of a constant thickness.

6. Side mirror according to claim 4, characterised in that the region (3) above the side mirror (1) is formed by a portion not movably disposed in the bodywork, particularly not movable downwards, such for example as a triangular window, a roof pillar or a rearwardly-extended portion of the windscreen.

## Revendications

1. Rétroviseur latéral comportant un miroir (1) et un élément optique (2) situé dans la direction de la ligne visuelle, des zones différentes de l'élément optique (2) présentant des convergences différentes, caractérisé par le fait que l'élément optique (2) constitue une partie de l'habillage du rétroviseur latéral et est agencé sous forme de glace claire (2) à profil aérodynamique et par le fait que la convergence de la vitre claire (2) décroît par zones au moins de la zone de ladite vitre claire (2) éloignée du miroir (1) en direction de la zone de la vitre claire (2) voisine du miroir (1).

2. Rétroviseur latéral selon la revendication 1, caractérisé par le fait que la convergence de la vitre claire (2) augmente de manière sensiblement continue de la zone voisine du miroir (1) en direction de la zone éloignée du miroir (1).

3. Rétroviseur latéral selon la revendication 1 ou 2, caractérisé par le fait que le miroir (1) est un miroir plan, présente une courbure concave, convexe, sphérique ou cylindrique, est un miroir à réseau fin avec des facettes inclinées par rapport à l'orientation générale de la surface du miroir ou est une combinaison des surfaces mentionnées.

4. Rétroviseur latéral selon l'une des revendications 1 à 3, caractérisé par le fait qu'il est intégré dans une partie de carrosserie pourvue d'une vitre latérale, par le fait que la vitre latérale est divisée en une partie (4) qui peut être abaissée et en une vitre fixe triangulaire (3) située en avant de celle-ci dans la direction de déplacement, par le fait que le rétroviseur latéral est disposé au-dessous de la vitre fixe triangulaire, par le fait que la partie (4) abaissable de la vitre latérale, en position fermée et en position totalement ou partiellement ouverte, est située hors du champ visuel du conducteur du véhicule sur le rétroviseur (1) et par le fait que la surface de la carrosserie située derrière le rétroviseur latéral dans la direction de déplacement affleure avec des éléments de guidage (5) de la vitre latérale (4) abaissable.

5. Rétroviseur latéral selon une des revendication 1 à 3, caractérisé par le fait qu'il est lié à un élément dont la partie (3) supérieure (3) qui n'est pas formée par le rétroviseur latéral est constituée par une vitre claire plane d'épaisseur constante.

6. Rétroviseur latéral selon la revendication 4, caractérisé par le fait que la partie (3) située au-dessus du rétroviseur latéral (1) est constituée par un élément monté fixe sur la carrosserie, notamment un élément qui ne peut pas être abaissé tel qu'un vitre fixe triangulaire, un montant de toit ou un prolongement vers l'arrière du pare-brise.
